(19) Europäisches Patentamt
European Patent Office
Office européen des brevets

(11) Veröffentlichungsnummer: **0 171 017**
**B1**

(12) **EUROPÄISCHE PATENTSCHRIFT**

(45) Veröffentlichungstag der Patentschrift: **11.07.90**

(51) Int. Cl.$^5$: **B 29 C 67/00,** B 29 C 67/24

(21) Anmeldenummer: **85109530.7**

(22) Anmeldetag: **29.07.85**

(54) **Thermoplastische Verarbeitung von thermotropen flüssigkristallinen Polymeren unter dem Einfluss von elektrischen und/oder magnetischen Feldern.**

(30) Priorität: **10.08.84 DE 3429431**

(43) Veröffentlichungstag der Anmeldung:
**12.02.86 Patentblatt 86/07**

(45) Bekanntmachung des Hinweises auf die Patenterteilung:
**11.07.90 Patentblatt 90/28**

(84) Benannte Vertragsstaaten:
**DE FR GB IT NL**

(56) Entgegenhaltungen:
**US-A-3 867 299**

**MAKROMOLEKULARE CHEMIE, Band 183, 1982, Seiten 1245-1256; H. RINGSDORF et al.: "Liquid crystalline side chain polymers and their behaviour in the electric field"**

**POLYMER, Band 22, Mai 1981, Seiten 578-580; C. NOEL et al.: "Orientation of nematic liquid crystalline polymer in a magnetic field"**

(73) Patentinhaber: **BAYER AG**
**D-5090 Leverkusen 1 Bayerwerk (DE)**

(72) Erfinder: **Weber, Gunter, Dr.**
**Buschstrasse 169**
**D-4150 Krefeld (DE)**
Erfinder: **Dicke, Hans-Rudolf, Dr.**
**Bodelschwinghstrasse 16**
**D-4150 Krefeld (DE)**
Erfinder: **Vogelsgesang, Roland, Dr.**
**Florastrasse 4,**
**D-5090 Leverkussen (DE)**
Erfinder: **Simm, Walter, Dipl.-Phys.**
**Feuerbachstrasse 1**
**D-5090 Leverkusen (DE)**
Erfinder: **Brinkmeyer, Hermann, Dr.**
**Bodelschwingstrasse 12**
**D-4150 Krefeld (DE)**

**EP 0 171 017 B1**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

Courier Press, Leamington Spa, England.

**Beschreibung**

Die Erfindung betrifft ein Verfahren zur Herstellung von Formkörpern durch thermoplastische formgebende Verarbeitung von thermotropen flüssigkristallinen Polymeren, insbesondere durch Pressen, Gießen, Spinnen, Extrudieren oder Spritzgießen.

In den letzten Jahren beschäftigte sich eine Vielzahl von Publikationen mit der Synthese (s. z.B. W. J. Jackson jr., H. F. Kuhfuss, J. Polym. Sci. Polym. Chem. Ed. 1976, *14*, 2043; W. J. Jackson jr., British Polymer J., 1980, 154; U.S. 3,804,805; 4,153,779; 4,118,372) und den Eigenschaften von flüssigkristallinen Polymeren. Man unterscheidet hierbei zwischen lyotropen und thermotropen flüssigkristallinen Polymeren. Eine lyotrope Mseophase erhält man durch Mischen des Polymeren mit einem geeigneten Lösungsmittel oberhalb einer bestimmten Feststoffkonzentration; die thermotrope Mesophase tritt in einem gewissen Temperaturbereich oberhalb der Verfestigungstemperatur auf. Bei den thermotropen LC-Polymeren unterscheidet man weiterhin zwischen sogenannten Haupt- und Seitenkettenpolymeren, je nachdem, ob die mesogene Gruppe in die Polymerhauptkette oder -seitenkette eingebaut ist.

Bei der konventionellen Verarbeitung (Extrusion, Spinnen) von flüssigkristallinen Polymeren wird eine teilweise Orientierung der mesogenen Bereiche durch die Einwirkung von mechanischen Feldern (longitudinale und transversale Geschwindigkeitsgradienten) erreicht. In den so hergestellten Formteilen liegen stark uneinheitlich orientierte Strukturen vor, die durch unterschiedlich starke Scherung und in Folge des komplizierten Abkühlvorganges der heißen Schmelze erzeugt werden. Licht- und elektronenmikroskopische Aufnahmen zeigen, daß die Orientierung über den Wandquerschnitt der Formteile ungleich und uneinheitlich ist. Üblicherweise sind die mesogenen Einheiten in der Nähe der Formteiloberfläche in einem grösseren Ausmaß in Fließrichtung orientiert als in Zonen, die weiter von der Oberfläche entfernt sind, insbesondere im Vergleich zur Querschnittsmitte. Für die technologischen Eigenschaften der Formteile ist es von Nachteil, daß eine gezielte, einstellbare Orientierungsverteilung unter dem Einfluß von mechanischen Feldern nicht oder nur in sehr begrenztem Umfang möglich ist.

Überraschenderweise wurde nun ein Verfahren gefunden, das es erlaubt, in bewegter Schmelze, d.h. vor und/oder während und/oder nach der thermoplastischen Formgebung gezielt die Orientierungsverteilung der Ketten zu beeinflussen. Als Ausgangsprodukt werden dabei thermotrope flüssigkristalline Polymere verwendet, die im Temperaturbereich zwischen Raumtemperatur und der Zersetzungstemperatur des Polymeren bei elektrischen Feldstärken von 10 V/cm bis weniger als die polymerspezifische Durchschlagsfeldstärke und bei Frequenzen von 0 bis zu 1 MHz bzw. bei magnetischen Gleich-und Wechselfeldern mit Feldstärken bis 20 kG innerhalb eines Zeitbereichs von einer Stunde, vorzugsweise innerhalb 10 Minuten, und insbesondere innerhalb von einer Minute einen optisch wahrnehmbaren Orientierungseffekt und/oder eine Veränderung der Morphologie zeigen. Die Orientierung der Ketten gelingt durch Anlegen von elektrischen und/oder magnetischen Feldern an die durch das formgebende Element strömende Polymerschmelze. Dabei wirkt das elektrische und/oder magnetische Feld auf dem Wege vom oder zum formgebenden Element (vorher oder nachher) auf die Polymerschmelze ein oder das elektrische bzw. magnetische Feld wird (vorzugsweise) innerhalb des formgebenden Elementes der Schmelze aufgeprägt. Die durch das elektrische bzw. magnetische Feld induzierte Orientierung der Ketten erlaubt gegenüber der mechanisch induzierten Orientierung eine breitere und vielfältigere gezielte Beeinflussung der strukturellen Organisation.

Gegenstand der Erfindung ist demnach ein Verfahren zur gezielten Orientierung von flüssigkristallinen Polymeren bei deren thermoplastischer Verarbeitung durch elektrische und/oder magnetische Felder.

Die nach dem erfindungsgemäßen Verfahren hergestellten Formteile sind dadurch gekennzeichnet, daß sie einen definiert eingestellten Orientierungsgrad f von 0 bis 1 aufweisen und damit gezielt eingestellte mechanische Eigenschaften besitzen. Der Orientierungsgrad f ist bekanntlich definiert durch:

$$f = \frac{(3 \cos^2 \theta - 1)}{2}$$

Dabei ist θ der Winkel zwischen der Kettenachse und der Richtung des die Orientierung bewirkenden Feldes (Direktor). Eine mögliche Variante des erfindungsgemäßen Verfahrens erlaubt beispielsweise die Herstellung von in Fließrichtung vollständig orientierten Formteilen ($f \simeq 1$).

Andererseits erlaubt das erfindungsgemäße Verfahren die Herstellung von Formteilen, in denen die Ketten oder Kettensegmente überwiegend senkrecht zur Fließrichtung orientiert sind. In diesem Fall wird das elektrische Feld senkrecht zur Fließrichtung an die Schmelze angelegt.

Für das erfindungsgemäße Verfahren sind prinzipiell alle solchen Polymeren geeignet, die mesogene Gruppen in der Haupt- und/oder Seitenkette besitzen und aus der flüssigkristallinen Schmelzphase verarbeitet werden können. Als mesogene Gruppen können die aus der Literatur (s. H. Kelker, R. Hatz, Handbook of Liquid Crystals, Verlag Chemie, Weinheim, 1980) bekannten chemischen Struktureinheiten verwendet werden.

Vorzugsweise werden thermotrope flüssigkristalline Polyester eingesetzt, die einen oder mehrere der folgenden Bausteine enthalten:

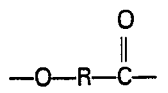 , 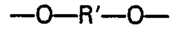 , 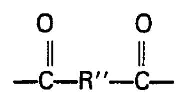

wobei R, R' und R'' aromatische Reste der allgemeinen Formel

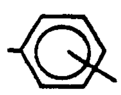 , 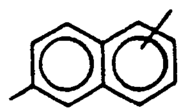 , 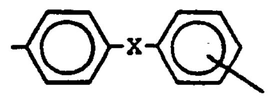

mit

X=S, O, 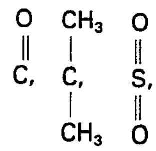 Einfachbindung, 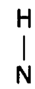

bedeuten.

Im übrigen sind solche thermotropen flüssigkristallinen Polymere geeignet, die im elektrischen Feld (Gleichstrom und Wechselstrom) mindestens einen oder gleichzeitig mehrere der folgenden physikalischen Effekte zeigen:

— Bildung von "Williams Domänen"
— Dynamisches Streuverhalten
— Freedericksz-Übergänge.

Die einzelnen Effekte sind in der Fachliteratur beschrieben und brauchen daher hier nicht im einzelnen erläutert zu werden.

Als Testverfahren für die Auswahl von für das erfindungsgemäße Verfahren geeigneten Polymeren sind die folgenden einfachen experimentellen Anordnungen geeignet.

Für die Untersuchung im elektrischen Gleich- und Wechselfeld eignet sich z.B. die in H. Ringsdorf und R. Zentel, Makromol. Chem. *183,* 1245 (1982) beschriebene Anordnung. Die relative Lichtintensität wird dabei in Abhängigkeit von der Temperatur, der thermischen und elektrischen Vorgeschichte, der Spannung, der Frequenz und der Zeit nach Anlegen des Feldes bestimmt. Der untersuchte Temperaturbereich erstreckt sich von Raumtemperatur bis zur Zersetzungstemperatur des Polymeren, der Feldstärkebereich von 10 V/cm bis weniger als die polymerspezifische Durchschlagfeldstärke, der Frequenzbereich erstreckt sich von 0 Hz bis 1 MHz. Wenn unter diesen Bedungungen, d.h. innerhalb des genannten Temperatur-, Feldstärke- und Frequenzbereichs, ein Orientierungseffekt (Veränderung der Transmission des Lichtes und/oder Veränderung der Morphologie) innerhalb eines Zeitbereichs von 1 Stunde, vorzugsweise 10 min und insbesondere unterhalb von 1 min, auftritt, ist das entsprechende Polymer für das erfindungsgemäße Verfahren geeignet.

Für die Untersuchung im magnetischen Feld ist beispielsweise die in C. Noel et al Polymer 22, 578 (1981) erwähnte Faraday-Anordnung geeignet. Dabei wird die Kraftänderung in einem homogenen Magnetfeld gemessen, die auf eine Probe mit der Suszeptibilität X wirkt. Aus dem bekannten Gewicht der Probe und dem Produkt aus Feld und Feldgradienten kann über die Kraftänderung die magnetische Suszeptibilität gemessen werden. Gemessen werden die Suszeptibilitäten $X_{11,n}$ und $X_{\perp,n}$ zur Vorzugsrichtung (Direktor $\vec{n}$), die Materialkonstanten darstellen.

Die magnetische Feldstärke variiert bis 20 kG. Ein Polymer ist dann für das erfindungsgemäße Verfahren geeignet, wenn innerhalb des genannten Temperatur- und Feld-stärkebereichs, innerhalb von weniger als 1 Stunde, vorzugsweise weniger als 10 Minuten, insbesondere weniger als 1 Minute, ein Orientierungseffekt auftritt.

Das erfindungsgemäße Verfahren kann prinzipiell auf alle Herstellungsmethoden für schmelzgesponnene Fäden übertragen werden, insbesondere auf die Herstellung von Filamentgarnen, wobei Abzugsgeschwindigkeiten bis 6000 m/min angewendet werden können. Diese Schmelzspinn-Verfahren sind z.B. beschrieben in:

B. v. Falkai; "Synthesefasern", Verlag Chemie, Weinheim, 1981.

In all diesen Verfahren kann das E-Feld und/oder H-Feld parallel oder senkrecht oder in jeder anderen definierten Lage zur Abzugsrichtung angelegt werden, was lediglich eine Anpassung der Elektroden und/ oder Spulenkörper an die gewünschte Orientierungsrichtung erfordert.

Das erfindungsgemäße Verfahren ist prinzipiell geeignet für die Herstellung von Extrudaten nach Verfahren wie beschrieben in z.B. McKelvey, J. M.; "Polymer Processing", J. Wiley & Sons, N.Y. 1962.

Das Anbringen von E-Feldern und/oder H-Feldern kann hierbei in ähnlicher Weise erfolgen wie bei der Spinntechnik.

Das erfindungsgemäße Verfahren ist prinzipiell geeignet für die Herstellung von Spritzgußteilen nach Verfahren wie sie in der Literatur beschrieben sind.

Die E-Felder und/oder H-Felder können dabei so angeordnet werden, daß der Schmelzfluß von der Düse bis in das Formteil beeinflußt werden kann.

Die Orientierungsverteilung der mesogenen Gruppen kann gezielt beeinflußt werden durch die Form, Größe und Anzahl der Elektroden bzw. Spulenkörper oder Variation der Feldstärken an den verschiedenen Elektroden.

Für das erfindungsgemäße Verfahren sind alle E-Feldstärken von 10 V/cm geeignet bis weniger als die polymerspezifische Durchschlagfeldstärke.

Die Höhe der magnetischen Felder wird begrenzt durch den technischen und wirtschaftlichen Aufwand. Feldstärken bis zu 20 kG sind jedoch ohne große Schwierigkeiten zu realisieren.

Im folgenden wird die Erfindung anhand von Zeichnungen und Ausführungsbeispielen beschrieben. Es zeigen

Fig. 1 schematisch eine Vorrichtung zum Schmelzspinnen von thermotropen flüssigkristallinen Polymeren, bei der das elektrische Gleichfeld parallel zur Strömungsrichtung während und nach der Formgebung auf die Schmelze einwirkt und

Fig. 2 eine Vorrichtung zum Schmelzspinnen von thermotropen flüssigkristallinen Polymeren, bei der das elektrische Gleichfeld nach der formgebung parallel zur Strömungsrichtung auf die Schmelze einwirkt und mittels einer Koronaentladung erzeugt wird.

Zur Herstellung einer thermotropen flüssigkristallinen Polyesterschmelze (LCP-Schmelze) wurden in einem Reaktiongsgefäß mit Rührer und Destillierbrücke 194 g p-Hydroxybenzosäure, 48,6 g Hydrochinon, 40,7 g 4,4'-Dihydroxydiphenyl, 17,1 g Terephthalsäure, 0,55 g Zink(II)acetat und 487,6 g Diphenylcarbonat auf 250°C erhitzt. Nach Erhöhung der Temperatur auf 295°C und Nachlassen der Destillationsgeschwindigkeit wurde bei dieser Temperatur langsam innerhalb 1 Stunde ein Vakuum von $0,5 \times 10^{-3}$bar angelegt und 1 Stunde nachkondensiert. Das erhaltene Produkt wies eine ausgeprägte Faserstruktur auf und ließ sich bei Temperaturen von 70°C bis 280°C thermoplastisch verarbeiten.

Diese LCP-Schmelze wurde mit einer Vorrichtung gemäß Fig. 1 zu einem Faden versponnen. Zu diesem Zweck wird die LCP-Schmelze 1 in einem beheizten Autoklaven 2 unter einem Druck von 1 bar auf eine Temperatur von 260°C gehalten. Am Boden des Autoklaven 2 befindet sich eine Spinndüse 3 mit einem Durchmesser von 1 mm. Durch Schwerkrafteinwirkung wird die Schmelze 1 mittels der Düse 3 zu einem Faden 4 versponnen, der mittels der Umlenkrollen 5, 6, 7 durch ein Wasserbad 8 geführt wird. Der Abstand zwischen der Spinndüse 3 und der Oberfläche des Wasserbades 8 betrug 50 mm. Die Abzugsgeschwindigkeit des Fadens betrug ca. 1 m/min. Zwischen dem geerdeten Autoklaven 2 und damit auch zwischen der Spinndüse 3 und dem isoliert aufgestellten Wasserbad 8 wurde eine Hochspannung von 30 kV angelegt. Der Minuspol war mit dem Wasserbad verbunden. Auf diese Weise wird in dem Faden 4 während und unmittelbar nach der Formgebung ein starkes elektrisches Feld erzeugt, bevor die Temperatur des Fadens 4 unter die Glastemperatur der LCP-Schmelze abfallen kann.

Die Orientierung der mesogenen Bereiche der so erzeugten Fäden wird verglichen mit der von Fäden aus dem gleichen Material, die ohne Einwirkung elektrischer Felder hergestellt wurden. Zu diesem Zweck wurde die Röntgenweitwinkelstreuung mit ortsauflösendem Detektor und Multichannelanalyzer untersucht, dabei wurden folgende Kenngrößen gemessen:

a) winkeldispersive Registrierung des Äquatorreflexes und

b) Registrierung der Intensitätsverteilung des Äquatorreflexes auf dem Debye-Kreis.

Die Ergebnisse sind in Tabelle 1 zusammengefaßt.

Bei der Spinnvorrichtung gemäß Fig. 1 wirkt das elektrische Feld parallel zur Fließrichtung der LCP-Schmelze 1. In Fig. 2 ist eine Spinnvorrichtung dargestellt, bei der ein elektrisches Gleichfeld in Fließrichtung durch eine Korona-Entladung erzeugt wird. Zu diesem Zweck ist unterhalb des Autoklavens 2 mit der Spinndüse 3 ein dünner Drahtring 9 angeordnet, der auf Hochspannung (40 kV) gegenüber Erde liegt. Der Abstand des Drahtringes 9 von der Spinndüse 3 beträgt wieder ca. 50 mm. Der Faden 4 wird mittels der Umlenkrolle 10 senkrecht zur Ebene des Drahtringes 9 durch dessen Mittelpunkt geführt. Zwischen dem Drahtring 9 und dem Faden 4 findet eine Korona-Entladung statt. Durch die Korona-Entladung werden Ionen erzeugt, die einen Strom für den Faden liefern. Das entstehende Potentialgefälle im Faden erzeugt ein Gleichfeld in Längsrichtung.

Die Ergebnisse der Röntgenweitwinkelstreuung sind gleichfalls in Tabelle 1 dargestellt.

Sowohl in der Größe der Kohärenzbereiche als auch in der Orientierung unterscheiden sich die unter Feldeinwirkung gemäß Fig. 1 und Fig. 2 hergestellten Fäden deutlich von denen, die ohne elektrischen Feldeinfluß hergestellt wurden. Die Änderung der morphologischen Eigenschaften geht mit entsprechenden Änderungen der mechanischen Eigenschaften, insbesondere der Elastizität und der Bruchfestigkeit einher.

TABELLE 1

Ergebnisse der Röntgenweitwinkelstreuung

| Probe | Kohärenzbereich [nm] | azimutale Breite [Grad] | Orientierung [Grad$^{-1}$] |
|---|---|---|---|
| Vergleichsprobe ohne E-Feld | 3,6 | 125 | 0,008 |
| Versuch mit Vorr. nach Fig. 1 (E-Feld longitudinal) | 4,5 | 19,7 | 0,051 |
| Versuch mit Vorr. nach Fig. 2 (E-Feld longitudinal mittels Koronaentladung) | 5,3 | 18 | 0,056 |

**Patentansprüche**

1. Verfahren zur Herstellung von Formkörpern durch thermoplastische, formgebende Verarbeitung von Polymeren, insbesondere durch Pressen, Gießen, Spinnen, Extrudieren oder Spritzgießen, dadurch gekennzeichnet, daß thermotrope flüssigkristalline Polymere als Ausgangsprodukt verwendet werden, die im Temperaturbereich zwischen Raumtemperatur und der Zersetzungstemperatur des Polymeren bei elektrischen Feldstärken von 10 V/cm bis weniger als die polymerspezifische Durchschlagsfeldstärke und bei Frequenzen von 0 bis zu 1 MHz bzw. bei magnetischen Gleich- oder Wechselfeldern mit Feldstärken bis 20 kG innerhalb eines Zeitbereichs von einer Stunde, vorzugsweise innerhalb 10 Minuten, und insbesondere innerhalb von einer Minute einen optisch wahrnehmbaren Orientierungseffekt und/oder eine Veränderung der Morphologie zeigen, und daß man vor und/oder während und/oder nach der Formgebung ein elektrisches Feld und/oder magnetisches Feld auf die strömende Polymerschmelze einwirken läßt, deren Temperatur auf einem Wert zwischen der Glastemperatur und dem Isotroppunkt gehalten wird.

2. Verfahren nach Anspruch 1 bis 3, dadurch gekennzeichnet, daß solche thermotropen flüssigkristallinen Polymeren verwendet werden, die mesogene Gruppen in der Haupt- und/oder Seitenkette besitzen.

3. Verfahren nach Anspruch 1 bis 4, dadurch gekennzeichnet, daß thermotrope flüssigkristalline Polyester verwendet werden, die einen oder mehrere der folgenden Bausteine enthalten:

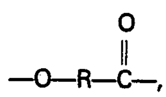, 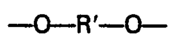, 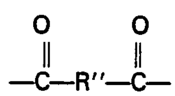

wobei R, R' und R'' aromatische Reste der allgemeinen Formel

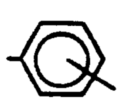, 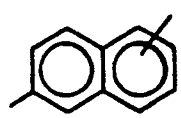, 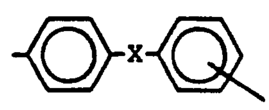

mit

X=S, O, 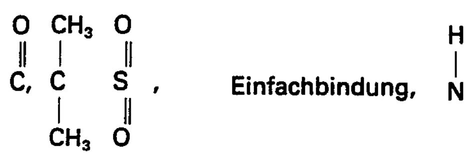

bedeuten.

4. Verfahren nach Anspruch 1 bis 5, dadurch gekennzeichnet, daß während der Abkühlung des Formkörpers das elektrische Feld solange aufrechterhalten wird, bis die Temperatur des Formkörpers unterhalb der Glastemperatur des betreffenden Materials liegt.

**Revendications**

1. Procédé pour la fabrication de pièces moulées par formage thermoplastique de polymère, en particulier par compression, coulée, filage, extrusion ou injection, caractérisé en ce que l'on utilise comme produit de départ des polymères à cristaux liquides thermotropes qui présentent un effet d'orientation décelable optiquement et/ou une modification de la morphologie en une durée de 1 h, de préférence en 10 min et en particulier en 1 min, dans un domaine de températures entre la température ambiante et la température de décomposition du polymère à des intensités de champs électriques de 10 V/cm jusqu'à moins de l'intensité de champ de claquage spécifique du polymère et à des fréquences 0 jusqu'à 1 MHz ou à des champs magnétiques continus ou alternatifs ayant des intensités de champ jusqu'à 20 kG et en ce que l'on fait agir un champ électrique et/ou un champ magnétique avant et/ou pendant et/ou après le formage sur le courant de polymère fondu dont la température est maintenue à une valeur comprise entre la température vitreuse et le point isotrope.

2. Procédé selon la revendication 1, caractérisé en ce que l'on utilise des polymères à cristaux liquides thermotropes qui possèdent des groupes mésogènes dans la chaîne principale et/ou dans la chaîne latérale.

3. Procédé selon les revendications 1 et 2, caractérisé en ce que l'on utilise des polyesters à cristaux liquides thermotropes qui contiennent un ou plusieurs des éléments structuraux suivants:

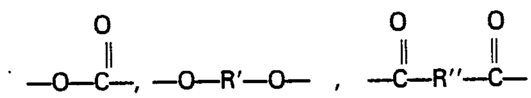

dans lesquels R, R' et R'' représentent des restes aromatiques de formule générale

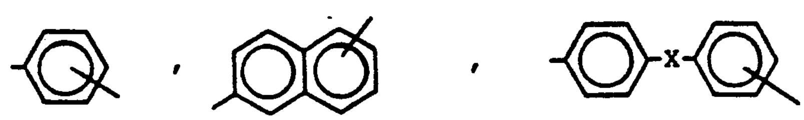

et X représente S, O, 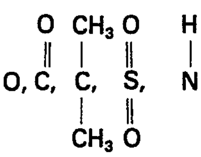 N ou une liaison simple.

4. Procédé selon les revendications 1 à 3, caractérisé en ce que le champ électrique est maintenu pendant le refroidissement de la pièce moulée jusqu'à ce que la température de la pièce moulée soit inférieure à la température de transition vitreuse du matériau concerné.

**Claims**

1. A process for the production of moulded articles for thermoplastically shaping polymers, in particular by pressure moulding, casting, spinning, extrusion or injection moulding, characterised in that the starting materials used are thermotropic, liquid crystalline polymers which manifest an optically perceivable orientation effect and or a change in morphology within a period of one hour, preferably within 10 minutes, in particular within one minute, in the temperature range of from room temperature to the decomposition temperature of the polymer at electric field strengths ranging from 10 V/cm down to less than the polymer specific breakdown field strength and at frequencies from 0 to 1 MHz or in magnetic direct or alternating fields having field strengths of up to 20 kg, and in that the flowing polymer melt, whose temperature is maintained at a value from the glass temperature to the isotropic point, is subjected to the action of an electric field or a magnetic field before and/or during and/or after the shaping process.

2. A process according to claim 1, characterised in that the thermotropic liquid crystalline polymers used have mesogenic groups in the main chain and/or side chain.

3. A process according to claim 1 or 2, characterised in that thermotropic liquid crystalline polyesters containing one or more of the following groups are used:

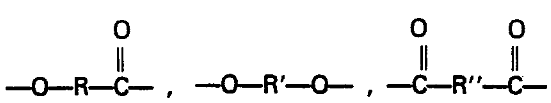

wherein R, R' and R'' stand for aromatic groups corresponding to the following general formulae:

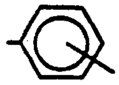 , 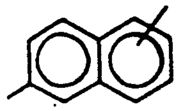 , 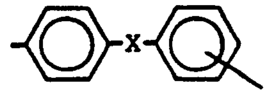

in which

X=S, O, 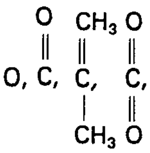 a single bond or 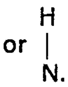

4. A process according to claims 1 to 3, characterised in that the electric field is maintained during cooling of the moulded article until the temperature of the moulded article is below the glass temperature of the material used.

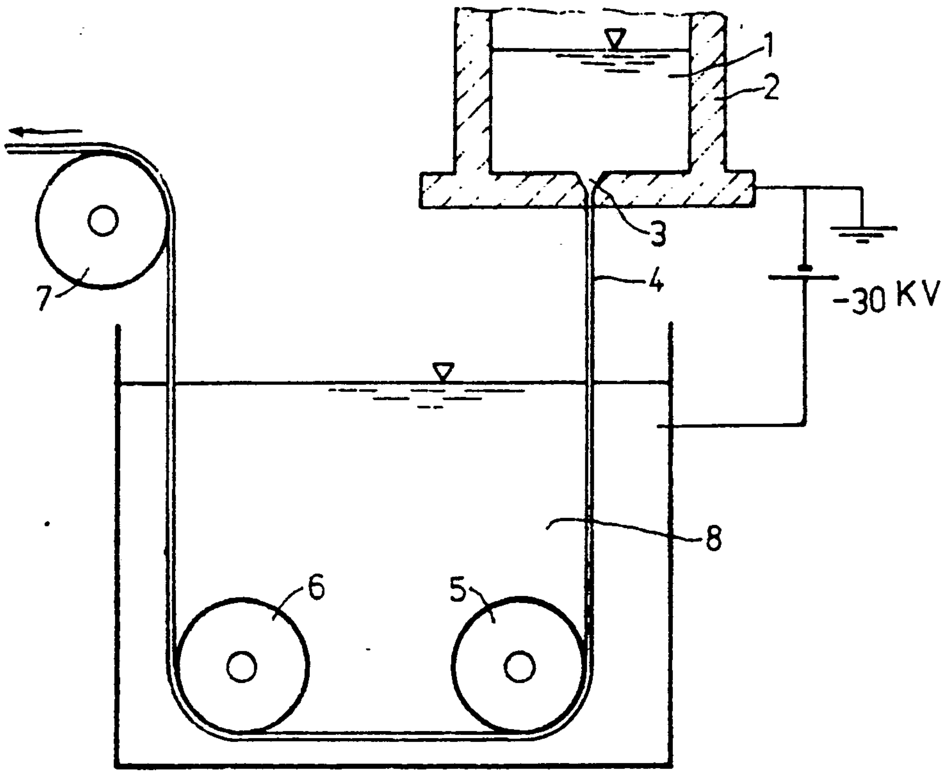


FIG. 1

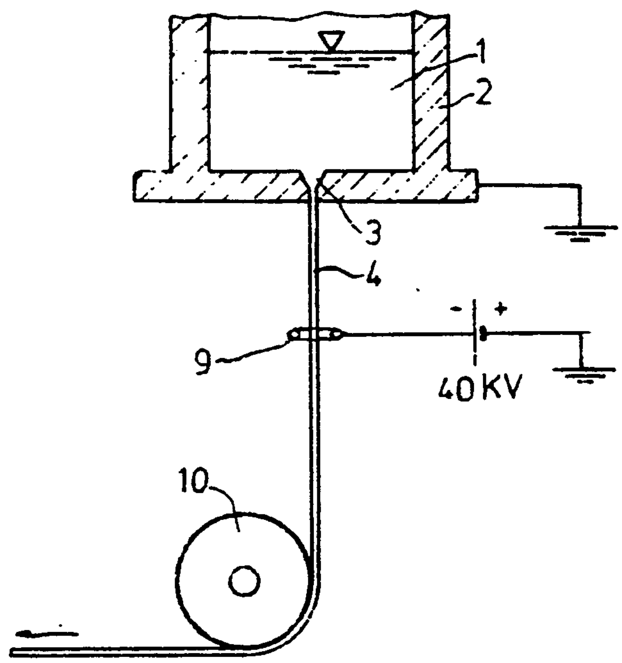


FIG. 2